# EUROPEAN PATENT APPLICATION

(11) **EP 4 456 273 A2**
(43) Date of publication of application: **30.10.2024**
(21) Application number: 24171570.5
(22) Date of filing: 22.04.2024
(51) Int. Cl.: H01M 50/107, H01M 50/528, H01M 50/536, H01M 50/559

(54) **CONNECTOR, BATTERY, BATTERY PACK, AND ELECTRICITY-CONSUMPTION DEVICE**

(30) Priority: 28.04.2023 CN 202310482958
(71) Applicant: Xiamen Hithium Energy Storage Technology Co., Ltd., Xiamen, Fujian 361100 (CN)
(72) Inventor: JIAO, Tianpeng, Xiamen, 361100 (CN); FANG, Chenxu, Xiamen, 361100 (CN)
(74) Representative: Mewburn Ellis LLP

(57) **Abstract**

A connector, a battery, a battery pack, and an electricity-consumption device are provided in the disclosure. The connector includes a current collecting layer and a functional layer. The functional layer is disposed on at least part of a surface of the current collecting layer. An absorption rate of the functional layer for a laser is greater than an absorption rate of the current collecting layer for the laser, and the functional layer is partially soluble in the electrolyte.

## Description

### TECHNICAL FIELD

This disclosure relates to the field of batteries, and in particular, to a connector, a battery, a battery pack, and an electricity-consumption device.

### BACKGROUND

With continuous development of technologies of lithium ion batteries, the lithium ion battery has advantages such as a large specific capacitance, no memory effect, a high operating voltage, a high charging speed, a wide operating-temperature range, a long cycle life, a small volume, and a light weight compared with other types of batteries such as lead-acid batteries and nickelcadmium batteries. At present, the lithium ion batteries are widely applicable in mobile phones, notebook computers, electric automobiles, energy-storage cabinets, and other fields, and have found increasingly wide utilization. A connector is an important connecting bridge between a tab of a battery and an electrode terminal of the battery, and connection between the connector and the tab and connection between the connector and the electrode terminal are usually realized through laser welding. However, at present, a connector has low absorption intensity for a laser, and thus poor welding such as inveracious solder and empty solder may easily occur during laser welding, resulting in poor intensity of welding the connector to the tab and the electrode terminal, and accordingly significantly affecting a safety performance and use reliability of the battery.

### SUMMARY

In a first aspect, a connector is provided in embodiments of the disclosure. The connector is applied to a battery, where the battery includes an electrolyte. The connector includes a current collecting layer and a functional layer. The functional layer is disposed on at least part of a surface of the current collecting layer. An absorption rate of the functional layer for a laser is greater than an absorption rate of the current collecting layer for the laser, and the functional layer is partially soluble in the electrolyte.

In a second aspect, a battery is provided in embodiments of the disclosure. The battery includes an electrolyte, an electrode assembly, and a connector. The connector includes a current collecting layer and a functional layer. The functional layer is disposed on at least part of a surface of the current collecting layer. An absorption rate of the functional layer for a laser is greater than an absorption rate of the current collecting layer for the laser, and the functional layer is partially soluble in the electrolyte. The electrode assembly is at least partially immersed in the electrolyte, and the electrode assembly is electrically connected to the connector.

In a third aspect, a battery pack is provided in embodiments of the disclosure. The battery pack includes a box and multiple batteries. The multiple batteries are received in the box and electrically connected in series and/or in parallel. The battery includes an electrolyte, an electrode assembly, and a connector. The connector includes a current collecting layer and a functional layer. The functional layer is disposed on at least part of a surface of the current collecting layer. An absorption rate of the functional layer for a laser is greater than an absorption rate of the current collecting layer for the laser, and the functional layer is partially soluble in the electrolyte. The electrode assembly is at least partially immersed in the electrolyte, and the electrode assembly is electrically connected to the connector.

In a fourth aspect, an electricity-consumption device is provided in embodiments of the disclosure. The electricity-consumption device includes an electricity-consumption device body and a battery. The battery is configured to power the electricity-consumption device body. The battery includes an electrolyte, an electrode assembly, and a connector. The connector includes a current collecting layer and a functional layer. The functional layer is disposed on at least part of a surface of the current collecting layer. An absorption rate of the functional layer for a laser is greater than an absorption rate of the current collecting layer for the laser, and the functional layer is partially soluble in the electrolyte. The electrode assembly is at least partially immersed in the electrolyte, and the electrode assembly is electrically connected to the connector.

### BRIEF DESCRIPTION OF THE DRAWINGS

In order to describe technical solutions in embodiments of the disclosure more clearly, the following will give a brief introduction to accompanying drawings required for describing embodiments. Apparently, the accompanying drawings hereinafter described merely illustrate some embodiments of the disclosure. Based on these drawings, those of ordinary skill in the art can also obtain other drawings without creative effort.
FIG. 1 is a schematic structural view of a connector in an embodiment of the disclosure.
FIG. 2 is a schematic cross-sectional structural view of the connector in FIG. 1, taken along line C-C.
FIG. 3 is a schematic structural view of a connector in another embodiment of the disclosure.
FIG. 4 is a schematic cross-sectional view of the connector in FIG. 3, taken along line C-C.
FIG. 5 is a schematic structural view of a battery in an embodiment of the disclosure.
FIG. 6 is a schematic exploded view of a battery in an embodiment of the disclosure.
FIG 7 is a schematic structural view of a battery pack in an embodiment of the disclosure.
FIG. 8 is a schematic structural view of an electricity-consumption device in an embodiment of the disclosure in the case where an electricity-consumption device body and a battery are not assembled together.

Description of reference signs of the accompanying drawings:
100 - connector, 110 - current collecting layer, 111 - body, 112 - welding area, 120 - functional layer, 200 - battery, 210 - end cover assembly, 220 - electrode assembly, 230 - housing, 240-electrolyte, 300 - battery pack, 310 - box, 311 - receiving cavity, 400 - electricity-consumption device, 410 - electricity-consumption device body.

### DETAILED DESCRIPTION

In order to facilitate better understanding of solution of the disclosure by those skilled in the art, the following will illustrate clearly and completely technical solutions of embodiments of the disclosure with reference to accompanying drawings of embodiments of the disclosure. Apparently, embodiments illustrated herein are merely some, rather than all, of the disclosure. Based on the embodiments of the disclosure, all other embodiments obtained by those of ordinary skill in the art without creative effort shall fall within the protection scope of the disclosure.

The terms "first", "second", and the like used in the specification, the claims, and the accompany drawings of the disclosure are used to distinguish different objects rather than describe a particular order. The terms "include", "comprise", and "have" as well as variations thereof are intended to cover non-exclusive inclusion. For example, a process, method, system, product, or apparatus including a series of steps or units is not limited to the listed steps or units, on the contrary, it can optionally include other steps or units that are not listed; alternatively, other steps or units inherent to the process, method, product, or device can be included either.

The following will illustrate technical solutions in embodiments of the disclosure with reference to the accompanying drawings.

It needs to be noted that, for convenience of illustration, the same reference sign of the accompanying drawings represents the same component in embodiments of the disclosure, and for sake of simplicity, detailed illustration of the same component is omitted in different embodiments.

With continuous development of technologies of lithium ion batteries, the lithium ion battery has advantages such as a large specific capacitance, no memory effect, a high operating voltage, a high charging speed, a wide operating-temperature range, a long cycle life, a small volume, and a light weight compared with other types of batteries such as lead-acid batteries and nickelcadmium batteries. At present, the lithium ion batteries are widely applicable in mobile phones, notebook computers, electric automobiles, energy-storage cabinets, and other fields, and have found increasingly wide utilization. A connector is an important connecting bridge between a tab of a battery and an electrode terminal of the battery, and connection between the connector and the tab and connection between the connector and the electrode terminal are usually realized through laser welding. However, at present, a connector has low absorption intensity for a laser, and thus poor welding such as inveracious solder and empty solder may easily occur during laser welding, resulting in poor intensity of welding the connector to the tab and the electrode terminal, and accordingly significantly affecting a safety performance and use reliability of the battery.

The inventors have found through research that, generally, at the same temperature, a smaller resistivity of a material leads to a lower absorption rate for a laser. In order to reduce an internal resistance of the battery, a metal conductor material such as copper, aluminum, nickel, or a composite material thereof, which has a relatively low resistivity and a relatively good electrical conductivity, is generally used as a connector of the battery. Since light waves on an electric field of a surface of a metal conductor always form a standing wave node (a standing wave refers to two waves having the same frequency and moving in opposite directions; and a standing wave node is a location in a standing wave where the wave has a minimum amplitude), free electrons may generate secondary waves by being subject to forced vibration of a light wave electromagnetic field, and intense reflected waves are caused due to these secondary waves, and thus most lasers are reflected. In addition, the connector is generally manufactured by a process such as stamping, and thus a surface of the connector is generally smooth. The material of the connector and the smooth surface of the connector lead to a very low absorption rate of the connector for the laser, and absorbed heat is quickly conducted and diffused to the surroundings, so that poor welding such as inveracious solder and empty solder may easily occur, and thus both intensity and efficiency of welding the connector to the tab and the like may be affected. When the connector is welded poorly to the tab, the internal resistance of the battery is relatively high, and in the case of a large current, the battery may easily generate heat due to an excessive temperature rise at a connection position between the connector and the tab, so that a safety performance and use reliability of the battery may be significantly affected. Meanwhile, when lasers irradiate onto these highly reflective materials, most energy may be reflected back, and a reflected laser may return to the interior of a laser device. As a result, during processing, light may be emitted unstably or stopped to be emitted, and even the laser device may be damaged, and thus a service life of the laser device may be shortened and use reliability of the battery may be reduced.

In view of the above problems, a connector, a battery, a battery pack, and an electricity-consumption device are provided in embodiments of the disclosure. In the related art, a connector has low absorption intensity for a laser, and thus poor welding such as inveracious solder and empty solder may easily occur during laser welding, resulting in poor intensity of welding the connector to the tab and the electrode terminal, and accordingly significantly affecting a safety performance and use reliability of the battery. With the aid of the connector, the battery, the battery pack, and the electricity-consumption device provided in embodiments of the disclosure, the above technical problems may be solved.

In a first aspect, a connector is provided in embodiments of the disclosure. The connector is applied to a battery, where the battery includes an electrolyte. The connector includes a current collecting layer and a functional layer. The functional layer is disposed on at least part of a surface of the current collecting layer. An absorption rate of the functional layer for a laser is greater than an absorption rate of the current collecting layer for the laser, and the functional layer is partially soluble in the electrolyte.

It may be understood that, by disposing the functional layer on a surface of a welding area of the current collecting layer, the absorption rate of the functional layer for the laser is greater than the absorption rate of the current collecting layer for the laser. Therefore, a reflectivity of the connector for the laser may be reduced, and absorption of laser energy by the welding area may be improved. In this case, intensity of welding the connector to a tab and the like may be increased after laser welding, connection intensity between the connector and the tab may be ensured, and a resistance of the battery may be reduced, thereby ensuring that the battery may have a relatively high capacity and a good cycle life. The functional layer is soluble in the electrolyte. In this case, on the one hand, the functional layer provides for the connector a relatively good absorption rate for the laser during laser welding, so that a good connection effect between the connector and the tab may be realized. On the other hand, the functional layer is soluble in the electrolyte, and the functional layer is infiltrated by the electrolyte after the battery is injected with the electrolyte. Therefore, the coating may be prevented from falling directly into the battery and prevented from being in a battery system in the form of a solid impurity, and thus self-discharge may less occur in the battery, and an internal short circuit of the battery may be avoided, thereby ensuring a safety performance and use reliability of the battery.

Furthermore, a thickness D of the functional layer satisfies: 0.2 µm≤D≤2 µm.

It may be understood that, by setting that the thickness D of the functional layer satisfies: 0.2 µm≤D≤2 µm, the connector may have a relatively high absorption rate for the laser, and intensity of welding the connector to the tab may be increased, thereby ensuring current transmission efficiency of the battery and reducing an internal resistance of the battery. In this case, it may also be ensured that after the functional layer is dissolved in the electrolyte, a concentration of a metal cation introduced is within a controllable range, thereby ensuring that the battery may have a relatively high capacity and a good cycle life.

Furthermore, a material of the functional layer comprises a metal complex and resin, where the metal complex is dispersed in the resin, and the metal complex is soluble in the electrolyte.

It may be understood that, the metal complex in the functional layer covers the welding area of the connector, and the metal complex plays a major role in improving the absorption rate of the connector for the laser. During laser welding, with the aid of the metal complex, the connector may reflect less lasers and increase absorption intensity for the laser, so that intensity of welding the connector to the tab and the like may be increased after laser welding, and a resistance of the battery may be reduced, thereby ensuring that the battery may have a relatively high capacity and a good cycle life. The battery is injected with the electrolyte, and the metal complex is soluble in the electrolyte, so that the coating may be prevented from falling directly into the battery and prevented from being in a battery system in the form of a solid impurity, and thus self-discharge may less occur in the battery, and an internal short circuit of the battery may be avoided, thereby ensuring a safety performance and use reliability of the battery. The resin in the functional layer may be used for dispersing the metal complex, so that not only can the metal complex be carried on the current collecting layer to increase the connection intensity between the metal complex and the current collecting layer, but also the functional layer may be uniformly coated to better ensure adhesion intensity and coating uniformity of the metal complex in the connector. In this case, the connection intensity between the connector and the tab may be further ensured after laser welding, thereby further ensuring that the battery may have a relatively high capacity and a good cycle life.

Furthermore, a mass percentage W₁ of the metal complex in the functional layer satisfies: 80%≤W₁≤99%; and a mass percentage W₂ of the resin in the functional layer satisfies: 1%≤W₂≤20%.

It may be understood that, the mass percentage W₁ of the metal complex in the functional layer is set to satisfy: 80%≤W₁≤99%, and the mass percentage W₂ of the resin in the functional layer is set to satisfy: 1%≤W₂≤20%. In this case, on the one hand, with the aid of the metal complex in the functional layer, the connector may reflect less lasers and increase absorption intensity for the laser, and the connection intensity between the connector and the tab may be further ensured after laser welding, thereby further ensuring that the battery may have a relatively high capacity and a good cycle life. On the other hand, it may be ensured that the metal complex is uniformly dispersed in the resin and the functional layer may be uniformly coated on the connector, and thus adhesion intensity and coating uniformity of the metal complex in the connector may be ensured, thereby reducing the resistance of the battery and improving use reliability of the connector.

Furthermore, the metal complex includes a metal cation and a ligand, where the metal cation includes at least one of a chromium ion, an iron ion, a titanium ion, or a zinc ion; and the ligand includes at least one of phthalocyanine, a thiodiene-type polymer, polyurethane, or mordant black.

It may be understood that, when the metal cation is at least one of a chromium ion, an iron ion, a titanium ion, or a zinc ion, the metal complex is a transition metal complex. The inventors have found through research that, in the transition metal complex, d-orbitals of a transition metal cation originally have the same energy, energy level splitting may occur to the d-orbitals of the transition metal cation under the action of a ligand field formed by ligands, an orbital obtained after splitting is not filled with an electron, and an electron can perform energy level transition between different orbitals obtained after splitting, so that an absorption spectrum may be generated. By setting that the metal complex includes the metal cation and the ligand and the metal cation includes at least one of a chromium ion, an iron ion, a titanium ion, or a zinc ion, during laser welding, a d-orbital that is not filled with an electron in the metal complex can perform laser absorption, and transition between different orbitals may be realized. Therefore, during laser welding, the absorption intensity of the connector for the laser may be increased, and the reflectivity of the connector for the laser may be reduced. In this case, energy absorbed by the functional layer is less likely to be conducted and diffused to the surroundings compared with that absorbed by the current collecting layer, and it may be ensured that a heat source area in which energy is highly concentrated may be formed at a welded position in the welding area in a relatively short time. Therefore, the connector and the tab may be partially melted to form a firm welding point and a firm welding seam, and thus connection intensity between the connector and the tab may be ensured, thereby ensuring that the battery may have a relatively high capacity and a good cycle life.

Furthermore, an average particle size D₅₀ of the metal complex satisfies: 5 nm ≤ D₅₀ ≤ 20 nm.

It may be understood that, by setting that the average particle size D₅₀ of the metal complex satisfies: 5 nm ≤ D₅₀ ≤ 20 nm, the metal complex has a moderate particle size, so that not only can dispersion uniformity of the metal complex in the resin be ensured, but also it is conducive to controlling the thickness of the functional layer and distribution uniformity of the metal complex. In this case, more active sites for laser absorption may be provided, difficulty in uniformly adhering the coating (i.e., the functional layer) to the current collecting layer may be reduced, and absorption intensity of the connector for the laser may be ensured. Therefore, connection intensity between the connector and the tab may be improved, and accordingly it is ensured that the battery may have a relatively high capacity and a good cycle life.

Furthermore, a reflectivity R of the functional layer for the laser satisfies: 5%≤R≤70%, and an absorption rate A of the functional layer for the laser satisfies: 30%≤A≤95%.

It may be understood that, by using a metal complex whose color is dark or even black, the functional layer mainly absorbs a laser and reflects a laser and substantially does not transmit a laser. That is, the sum of the absorption rate A of the functional layer for the laser and the reflectivity R of the functional layer for the laser is approximately equal to 100%. By setting that the absorption rate A of the functional layer for the laser satisfies: 30%≤A≤95% and the reflectivity R of the functional layer for the laser satisfies: 5%≤R≤70%, absorption intensity of the functional layer for the laser may be ensured, and the reflectivity of the connector for the laser may be reduced. In this case, energy absorbed by the functional layer is less likely to be conducted and diffused to the surroundings compared with that absorbed by the current collecting layer. Therefore, the connector and the tab may be partially melted to form a firm welding point and a firm welding seam, and accordingly connection intensity between the connector and the tab may be ensured, thereby ensuring that the battery may have a relatively high capacity and a good cycle life.

Furthermore, the resin includes at least one of rosin ester, ketone resin, xylene resin, acrylic resin, polyamide resin, ethylene resin, alkyl phenol resin, maleic acid resin, or cellulose resin.

It may be understood that, when the above substances each are used as the resin for dispersing the metal complex, a time for uniformly dispersing the metal complex may be reduced, film-forming uniformity of a coating slurry may be improved, and adhesion intensity of the functional layer may be ensured, and thus absorption intensity of the connector for the laser may be further improved. In this case, connection intensity between the connector and the tab may be better ensured after laser welding, thereby better ensuring that the battery may have a relatively high capacity and a good cycle life.

In a second aspect, a battery is provided in embodiments of the disclosure. The battery includes an electrolyte, an electrode assembly, and the connector in embodiments of the disclosure. The electrode assembly is at least partially immersed in the electrolyte, and the electrode assembly is electrically connected to the connector.

Furthermore, a material of the functional layer comprises a metal complex and resin. The metal complex is soluble in the electrolyte, the metal complex includes a metal cation and a ligand, and a mass content C of a metal cation in the electrolyte satisfies: 1 ppm≤C≤70 ppm.

It may be understood that, when the mass content C of the metal cation in the electrolyte is greater than 70 ppm, a concentration of the metal cation in the electrolyte is relatively high. In this case, during charge-and-discharge cycling of the battery, the metal cation may react with other substances in the battery system, and excessive side reactions and byproducts may affect a cycling performance of the battery. By setting that the mass content C of the metal cation in the electrolyte satisfies: 1 ppm≤C≤70 ppm, it may be ensured that the connector may have a relatively high absorption rate for the laser, and intensity of welding the connector to the tab may be increased, thereby ensuring current transmission efficiency of the battery and reducing the internal resistance of the battery. In this case, it may also be ensured that after the functional layer is dissolved in the electrolyte, a concentration of a metal cation introduced is within a controllable range, thereby ensuring that the battery may have a relatively high capacity and a good cycle life.

In a third aspect, a battery pack is provided in embodiments of the disclosure. The battery pack includes a box and multiple batteries in embodiments of the disclosure. The multiple batteries are received in the box and electrically connected in series and/or in parallel.

In a fourth aspect, an electricity-consumption device is provided in embodiments of the disclosure. The electricity-consumption device includes an electricity-consumption device body and the battery in embodiments of the disclosure. The battery is configured to power the electricity-consumption device body.

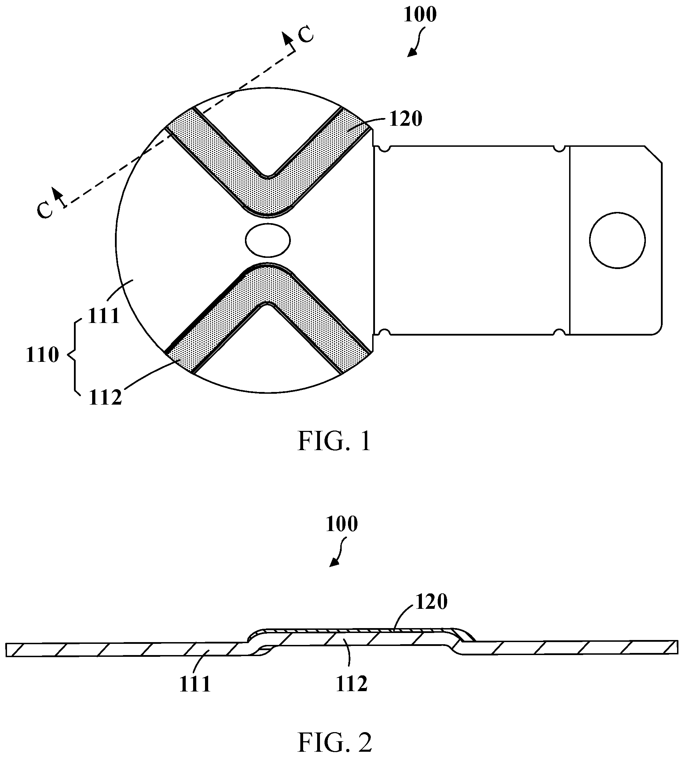

Referring to FIGs. 1 to 4, a connector 100 is provided in embodiments of the disclosure. The connector 100 is applied to a battery, where the battery includes an electrolyte. The connector 100 includes a current collecting layer 110 and a functional layer 120. The functional layer 120 is disposed on at least part of a surface of the current collecting layer 110. An absorption rate of the functional layer 120 for a laser is greater than an absorption rate of the current collecting layer 110 for the laser, and the functional layer 120 is partially soluble in the electrolyte.

Exemplarily, refer to FIG. 1 and FIG. 2, where FIG. 1 is a schematic structural view of a connector 100 in an embodiment of the disclosure, and FIG. 2 is a schematic cross-sectional structural view of the connector 100 in FIG. 1, taken along line C-C. In FIG. 2, the connector 100 in embodiments of the disclosure includes the current collecting layer 110 and the functional layer 120. The current collecting layer 110 includes a body 111 and a welding area 112, where the welding area 112 is connected to the body 111. In a thickness direction of the body 111, the welding area 112 exceeds the body 111, and the functional layer 120 is disposed on a surface of the welding area 112. The absorption rate of the functional layer 120 for the laser is greater than the absorption rate of the current collecting layer 110 for the laser, and the functional layer 120 is partially soluble in the electrolyte. The functional layer 120 may be coated on the surface of the current collecting layer 110 by means of roll coating, spray coating, brushing coating, etc.

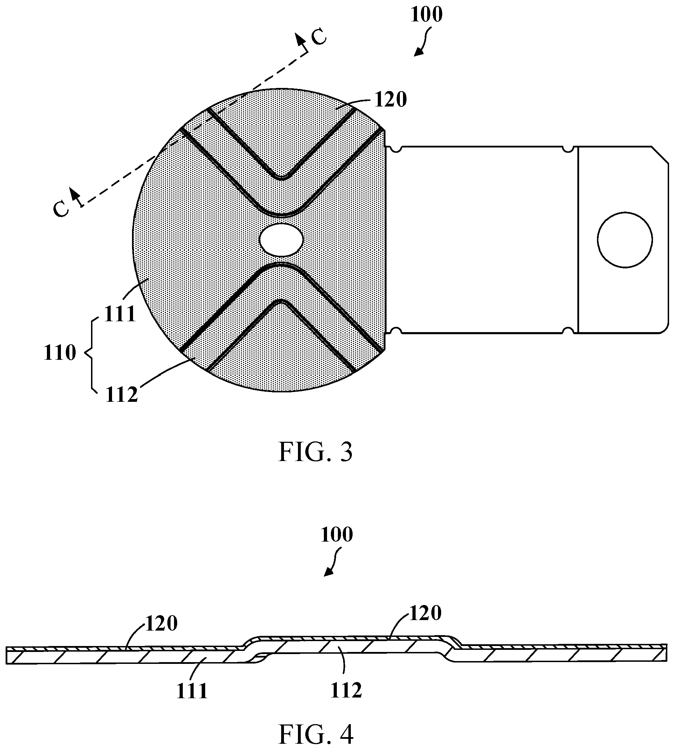

Exemplarily, refer to FIG. 3 and FIG. 4, where FIG. 3 is a schematic structural view of a connector 100 in another embodiment of the disclosure, and FIG. 4 is a schematic cross-sectional view of the connector 100 in FIG. 3, taken along line C-C. In order to simplify the operation of coating the functional layer 120 onto the current collecting layer 110, in FIG. 3, the functional layer 120 is disposed on the entire surface of the connector 100, that is, the functional layer 120 may be further disposed on a surface of the body 111 besides the surface of the welding area 112.

By disposing the functional layer 120 on the surface of the welding area 112 of the current collecting layer 110, the absorption rate of the functional layer 120 for the laser is greater than the absorption rate of the current collecting layer 110 to for the laser, so that a reflectivity of the connector 100 for the laser may be reduced, and absorption of laser energy by the welding area 112 may be improved. In this case, intensity of welding the connector 100 and a tab and the like may be increased after laser welding, connection intensity between the connector 100 and the tab may be ensured, and a resistance of the battery may be reduced, thereby ensuring that the battery may have a relatively high capacity and a good cycle life. The functional layer 120 is soluble in the electrolyte. In this case, on the one hand, the functional layer 120 provides for the connector 100 a relatively good absorption rate for the laser during laser welding, so that a good connection effect between the connector 100 and the tab may be realized. On the other hand, the functional layer 120 is soluble in the electrolyte, and the functional layer 120 is infiltrated by the electrolyte after the battery is injected with the electrolyte. Therefore, the coating may be prevented from falling directly into the battery and prevented from being in a battery system in the form of a solid impurity, and thus self-discharge may less occur in the battery, and an internal short circuit of the battery may be avoided, thereby ensuring a safety performance and use reliability of the battery.

In some embodiments, a thickness D of the functional layer 120 satisfies: 0.2 µm≤D≤2 µm. Specifically, the thickness of the functional layer 120 may be, but is not limited to, 0.2 µm, 0.3 µm, 0.4 µm, 0.5 µm, 0.6 µm, 0.7 µm, 0.8 µm, 0.9 µm, 1.0 µm, 1.2 µm, 1.3 µm, 1.4 µm, 1.5 µm, 1.6 µm, 1.7 µm, 1.8 µm, 1.9 µm, or 2.0 µm. When the thickness D of the functional layer 120 is less than 0.2 µm, the functional layer 120 covering the current collecting layer 110 is too thin. In this case, when the laser irradiates on the connector 100, most laser energy may be reflected back by the current collecting layer 110. As a result, the absorption rate of the connector 100 for the laser is relatively low, leading to a risk of poor welding and a relatively high internal resistance of the battery, thereby affecting intensity of welding the connector 100 to the tab and the like and affecting the performance of the battery. When the thickness D of the functional layer 120 is greater than 2 µm, the functional layer 120 covering the current collecting layer 110 is too thick. In this case, during laser welding, the functional layer 120 is located between the current collecting layer 110 and the tab, and thus a relatively thick functional layer 120 may affect not only intensity of welding the current collecting layer 110 to the tab but also current transmission efficiency between the tab and the current collector 110, resulting in a relatively high resistance of the battery. Meanwhile, when the metal complex is dissolved in the electrolyte, a concentration of the metal cation in the electrolyte is too high, so that many side reactions may occur in a battery system, and thus a cycling performance of the battery may be deteriorated. By setting that the thickness D of the functional layer 120 satisfies: 0.2 µm≤D≤2 µm, the connector 100 may have a relatively high absorption rate for the laser, and intensity of welding the connector 100 to the tab may be increased, thereby ensuring current transmission efficiency of the battery and reducing the internal resistance of the battery. In this case, it may also be ensured that after the functional layer 120 is dissolved in the electrolyte, a concentration of a metal cation introduced is within a controllable range, thereby ensuring that the battery may have a relatively high capacity and a good cycle life.

Furthermore, the thickness D of the functional layer 120 satisfies: 0.5 µm ≤ D ≤ 1 µm. By setting that the thickness D of the functional layer 120 satisfies: 0.5 µm ≤ D ≤ 1 µm, it may be further ensured that the connector 100 may have a relatively high absorption rate for the laser, and intensity of welding the connector 100 to the tab may be further improved, thereby better ensuring current transmission efficiency of the battery and reducing the internal resistance of the battery. In this case, current transmission efficiency between the connector 100 and the tab may be further reduced, and it may be further ensured that after the functional layer 120 is dissolved in the electrolyte, the concentration of the metal cation introduced is within the controllable range, thereby better ensuring that the battery may have a relatively high capacity and a good cycle life.

In some embodiments, a material of the functional layer 120 comprises a metal complex and resin, where the metal complex is dispersed in the resin, and the metal complex is soluble in the electrolyte. It may be understood that, the metal complex in the functional layer 120 covers the welding area 112 of the connector 100, and the metal complex plays a major role in improving the absorption rate of the connector 100 for the laser. During laser welding, with the aid of the metal complex, the connector 100 may reflect less lasers and increase absorption intensity for the laser. Therefore, intensity of welding the connector 100 to the tab and the like may be increased after laser welding, and a resistance of the battery may be reduced, thereby ensuring that the battery may have a relatively high capacity and a good cycle life. The battery is injected with the electrolyte, and the metal complex is soluble in the electrolyte, so that the coating may be prevented from falling directly into the battery and prevented from being in a battery system in the form of a solid impurity, and thus self-discharge may less occur in the battery, and an internal short circuit of the battery may be avoided, thereby ensuring a safety performance and use reliability of the battery. The resin in the functional layer 120 may be used for dispersing the metal complex, so that not only can the metal complex be carried on the current collecting layer 110 to increase the connection intensity between the metal complex and the current collecting layer 110, but also the functional layer 120 may be uniformly coated to better ensure adhesion intensity and coating uniformity of the metal complex in the connector 100. In this case, the connection intensity between the connector 100 and the tab may be further ensured after laser welding, thereby further ensuring that the battery may have a relatively high capacity and a good cycle life.

In some embodiments, a mass percentage W₁ of the metal complex in the functional layer 120 satisfies: 80%≤W₁≤99%; and a mass percentage W₂ of the resin in the functional layer 120 satisfies: 1%≤W₂≤20%. Specifically, the mass percentage W₁ of the metal complex in the functional layer 120 may be, but is not limited to, 80%, 81%, 82%, 83%, 84%, 85%, 86%, 87%, 88%, 89%, 90%, 91%, 92%, 93%, 94%, 95%, 96%, 97%, 98%, 99%. The mass percentage W₂ of the resin in the functional layer 120 may be, but is not limited to, 1%, 2%, 3%, 4%, 5%, 6%, 7%, 8%, 9%, 10%, 11%, 12%, 13%, 14%, 15%, 16%, 17%, 18%, 19%, or 20%. When the mass percentage W₁ of the metal complex in the functional layer 120 is less than 80% and the mass percentage W₂ of the resin in the functional layer 120 is greater than 20%, a proportion of the metal complex in the functional layer 120 is too small, and a proportion of the resin in the functional layer 120 is too large. In this case, not only does too small amount of the metal complex have a limited contribution to increasing of the absorption intensity of the connector 100 for the laser, but also the excessive amount of the resin may increase a contact resistance between the current collecting layer 110 and the tab. Therefore, current transmission efficiency between the current collecting layer 110 and the tab may be affected, and the internal resistance of the battery may be relatively high, thereby affecting a specific capacity and the cycle life of the battery. When the mass percentage W₁ of the metal complex in the functional layer 120 is greater than 99% and the mass percentage W₂ of the resin in the functional layer 120 is less than 1%, there is relatively great difficulty for the resin to disperse the metal complex, and it is disadvantageous for the functional layer 120 to be uniformly coated on the connector 100. As a result, a binding force between the functional layer 120 and the current collecting layer 110 and the absorption intensity of the functional layer 120 for the laser may be affected, and thus the connection intensity between the connector 100 and the tab may be affected, thereby affecting the performance and use reliability of the battery. The mass percentage W₁ of the metal complex in the functional layer 120 is set to satisfy: 80%≤W₁≤99%, and the mass percentage W₂ of the resin in the functional layer 120 is set to satisfy: 1%≤W₂≤20%. In this case, on the one hand, with the aid of the metal complex in the functional layer 120, the connector 100 may reflect less lasers and increase absorption intensity for the laser, and the connection intensity between the connector 100 and the tab may be further ensured after laser welding, thereby further ensuring that the battery may have a relatively high capacity and a good cycle life. On the other hand, it may be ensured that the metal complex is uniformly dispersed in the resin and the functional layer 120 may be uniformly coated on the connector 100, and thus adhesion intensity and coating uniformity of the metal complex in the connector 100 may be ensured, thereby reducing the resistance of the battery and improving use reliability of the connector 100.

Furthermore, the mass percentage W₁ of the metal complex in the functional layer 120 satisfies: 95%≤W₁≤99%, and the mass percentage W₂ of the resin in the functional layer 120 satisfies: 1%≤W₂≤5%. By setting that the mass percentage W₁ of the metal complex in the functional layer 120 satisfies: 95%≤W₁≤99% and the mass percentage W₂ of the resin in the functional layer 120 satisfies: 1%≤W₂≤5%, the connector 100 may further reflect less lasers and further increase the absorption intensity for the laser, and the connection intensity between the connector 100 and the tab may be better ensured after laser welding, thereby further ensuring that the battery may have a relatively high capacity and a good cycle life. A content of the resin may be further reduced in the case of ensuring adhesion intensity and coating uniformity of the metal complex in the connector 100. Therefore, the contact resistance between the current collecting layer 110 and the tab may be further reduced, and thus current transmission efficiency of the battery may be improved, thereby further ensuring that the battery may have a relatively high capacity and a good cycle life.

In some embodiments, the metal complex includes a metal cation and a ligand, where the metal cation includes at least one of a chromium ion, an iron ion, a titanium ion, or a zinc ion. Optionally, when the metal cation is a transition metal cation and the metal cation is at least one of a chromium ion, an iron ion, a titanium ion, or a zinc ion, the metal complex is a transition metal complex. The inventors have found through research that, in the transition metal complex, d-orbitals of a transition metal cation originally have the same energy, energy level splitting may occur to the d-orbitals of the transition metal cation under the action of a ligand field formed by ligands, an orbital obtained after splitting is not filled with an electron, and an electron can perform energy level transition between different orbitals obtained after splitting, so that an absorption spectrum may be generated. By setting that the metal complex includes the metal cation and the ligand and the metal cation includes at least one of a chromium ion, an iron ion, a titanium ion, or a zinc ion, during laser welding, a d-orbital that is not filled with an electron in the metal complex can perform laser absorption, and transition between different orbitals may be realized. Therefore, during laser welding, the absorption intensity of the connector 100 for the laser may be increased, and the reflectivity of the connector 100 for the laser may be reduced. In this case, energy absorbed by the functional layer 120 is less likely to be conducted and diffused to the surroundings compared with that absorbed by the current collecting layer 110, and it may be ensured that a heat source area in which energy is highly concentrated may be formed at a welded position in the welding area 112 in a relatively short time. Therefore, the connector 100 and the tab may be partially melted to form a firm welding point and a firm welding seam, and thus connection intensity between the connector 100 and the tab may be ensured, thereby ensuring that the battery may have a relatively high capacity and a good cycle life.

In some embodiments, the ligand includes at least one of phthalocyanine, a thiodiene-type polymer, polyurethane, or mordant black. A number-average molecular weight M₁ of the thiodiene-typed polymer satisfies: 500 ≤ M₁ ≤ 5000. A number-average molecular weight M₂ of the polyurethane satisfies: 500 ≤ M₂ ≤ 5000. The mordant black may be at least one of acid mordant black A, mordant black 3, acid mordant black P2B, acid mordant black PV, acid mordant black T, or mordant black 17. When the above substances each are used as the ligand for the metal cation, a color of a metal complex formed by coordination between the ligand and the metal cation is dark. Furthermore, a substance which can coordinate with the metal cation to form a metal complex in black is used as a ligand. When the color of the metal complex is black, it indicates that an energy level of an electron of the metal complex is relatively low, and thus energy level transition can be realized with only relatively low photon energy. That is, the metal complex may better absorb incident laser energy, so that absorption intensity of the connector 100 for the laser may be further increased, and the reflectivity of the connector 100 for the laser may be reduced. In this case, energy absorbed by the functional layer 120 is less likely to be conducted and diffused to the surroundings compared with that absorbed by the current collecting layer 110, and the connector 100 and the tab may be partially melted to form a firm welding point and a firm welding seam, and thus connection intensity between the connector 100 and the tab may be further ensured, thereby further ensuring that the battery may have a relatively high capacity and a good cycle life.

In some embodiments, an average particle size D₅₀ of the metal complex satisfies: 5 nm ≤ D₅₀ ≤ 20 nm. The average particle size D₅₀ of the metal complex may be, but is not limited to, 5 nm, 6 nm, 7 nm, 8 nm, 9 nm, 10 nm, 11 nm, 12 nm, 13 nm, 14 nm, 15 nm, 16 nm, 17 nm, 18 nm, 19 nm, or 20 nm. When the average particle diameter D₅₀ of the metal complex is less than 5 nm, a particle of the metal complex is too small. In this case, the metal complex is prone to agglomeration, resulting in that there is relatively great difficulty for the resin to disperse the metal complex, and the metal complex in the functional layer 120 has relatively poor distribution uniformity. Therefore, a binding force between the functional layer 120 and the current collecting layer 110 and the absorption intensity of the functional layer 120 for the laser may be affected, and thus the connection intensity between the connector 100 and the tab is relatively low, thereby affecting the performance and use reliability of the battery. When the average particle diameter D₅₀ of the metal complex is greater than 20 nm, the particle of the metal complex is too large. In this case, it is not conducive to controlling the thickness of the functional layer 120, resulting in a relatively high contact resistance between the connector 100 and the tab. In addition, the metal complex has few active sites for laser absorption, so that the absorption intensity of the functional layer 120 for the laser is relatively low, and the connection intensity between the connector 100 and the tab is affected, thereby affecting the performance and use reliability of the battery. By setting that the average particle size D₅₀ of the metal complex satisfies: 5 nm ≤ D₅₀ ≤ 20 nm, the metal complex has a moderate particle size, so that not only can dispersion uniformity of the metal complex in the resin be ensured, but also it is conducive to controlling the thickness of the functional layer 120 and distribution uniformity of the metal complex. In this case, more active sites for laser absorption may be provided, difficulty in uniformly adhering the coating to the current collecting layer 110 may be reduced, and absorption intensity of the connector 100 for the laser may be ensured. Therefore, connection intensity between the connector 100 and the tab may be improved, and accordingly it is ensured that the battery may have a relatively high capacity and a good cycle life.

In some embodiments, a reflectivity R of the functional layer 120 for the laser satisfies: 5%≤R≤70%, and an absorption rate A of the functional layer 120 for the laser satisfies: 30%≤A≤95%. Specifically, the reflectivity R of the functional layer 120 for the laser may be, but is not limited to, 5%, 8%, 10%, 12%, 15%, 18%, 20%, 22%, 25%, 28%, 30%, 32%, 35%, 38%, 40%, 42%, 45%, 48%, 50%, 52%, 55%, 58%, 60%, 62%, 65%, 68%, or 70%. The absorption rate A of the functional layer 120 for the laser may be, but is not limited to, 30%, 32%, 35%, 38%, 40%, 42%, 45%, 48%, 50%, 52%, 55%, 58%, 60%, 62%, 65%, 68%, 70%, 72%, 75%, 78%, 80%, 82%, 85%, 88%, 90%, 92%, or 95%. By using a metal complex whose color is dark or even black, the functional layer 120 mainly absorbs a laser and reflects a laser and substantially does not transmit a laser. That is, the sum of the absorption rate A of the functional layer 120 for the laser and the reflectivity R of the functional layer 120 for the laser is approximately equal to 100%. By setting that the absorption rate A of the functional layer 120 for the laser satisfies: 30%≤A≤95% and the reflectivity R of the functional layer 120 for the laser satisfies: 5%≤R≤70%, absorption intensity of the functional layer 120 for the laser may be ensured, and the reflectivity of the connector 100 for the laser may be reduced. In this case, energy absorbed by the functional layer 120 is less likely to be conducted and diffused to the surroundings compared with that absorbed by the current collecting layer 110. Therefore, the connector 100 and the tab may be partially melted to form a firm welding point and a firm welding seam, and accordingly connection intensity between the connector 100 and the tab may be ensured, thereby ensuring that the battery may have a relatively high capacity and a good cycle life.

In some embodiments, when the connector 100 is welded by a laser, a wavelength λ of the laser satisfies: 1050 nm ≤ λ≤ 1070 nm, and specifically, the wavelength λ of the laser is 1064 nm. Welding power P of the laser satisfies: 1500 W ≤ P ≤ 4000 W, and a welding speed v of the laser satisfies: 50 mm/s ≤ v ≤ 200 mm/s. By setting that the welding power P of the laser satisfies: 1500 W ≤ P ≤ 4000 W, it may be ensured that relatively high power may bring relatively high welding energy during laser welding, and a heat source area in which energy is highly concentrated may be formed at a welded position in the welding area 112 in a relatively short time. Therefore, the connector 100 and the tab may be partially melted to form a firm welding point and a firm welding seam, and low welding intensity due to excessively low welding power may be avoided, or an increase in energy consumption due to excessive welding power may be avoided, thereby ensuring connection intensity and welding efficiency of the connector 100 to the tab. By setting that the welding speed v of the laser satisfies: 50 mm/s ≤ v ≤ 200 mm/s, a time for the laser to weld the connector 100 to the tab during laser welding may be ensured. Therefore, excessively low welding efficiency due to an excessively slow welding speed may be avoided, or poor welding such as inveracious solder or empty solder due to an excessively fast welding speed, thereby ensuring the connection intensity and welding efficiency of the connector 100 to the tab.

In some embodiments, the resin includes at least one of rosin ester, ketone resin, xylene resin, acrylic resin, polyamide resin, ethylene resin, alkyl phenol resin, maleic acid resin, or cellulose resin. When the above substances each are used as the resin for dispersing the metal complex, a time for uniformly dispersing the metal complex may be reduced, film-forming uniformity of a coating slurry may be improved, and adhesion intensity of the functional layer 120 may be ensured, and thus absorption intensity of the connector 100 for the laser may be further improved. In this case, connection intensity between the connector 100 and the tab may be better ensured after laser welding, thereby better ensuring that the battery may have a relatively high capacity and a good cycle life.

In some embodiments, a mass content C of a metal cation in the electrolyte satisfies: 1 ppm≤C≤70 ppm. Specifically, the mass content C of the metal cation in the electrolyte may be, but is not limited to, 1 ppm, 5 ppm, 8 ppm, 10 ppm, 15 ppm, 18 ppm, 20 ppm, 25 ppm, 28 ppm, 30 ppm, 35 ppm, 38 ppm, 40 ppm, 45 ppm, 48 ppm, 50 ppm, 55 ppm, 58 ppm, 60 ppm, 65 ppm, 68 ppm, or 70 ppm. When the mass content C of the metal cation in the electrolyte is greater than 70 ppm, a concentration of the metal cation in the electrolyte is relatively high. In this case, during charge-and-discharge cycling of the battery, the metal cation may react with other substances in the battery system, and excessive side reactions and byproducts may affect a cycling performance of the battery. By setting that the mass content C of the metal cation in the electrolyte satisfies: 1 ppm≤C≤70 ppm, it may be ensured that the connector 100 may have a relatively high absorption rate for the laser, and intensity of welding the connector 100 to the tab may be increased, thereby ensuring current transmission efficiency of the battery and reducing the internal resistance of the battery. In this case, it may also be ensured that after the functional layer 120 is dissolved in the electrolyte, a concentration of a metal cation introduced is within a controllable range, thereby ensuring that the battery may have a relatively high capacity and a good cycle life.

The connector 100 of the disclosure may be further described below through specific embodiments.
1. Manufacturing of connectors 100 in embodiments 1 to 17 and comparative embodiment 1 is as follows.

A substrate of the connector 100 is made of aluminium. 1,2-butanediol is used as an organic solvent, resin of a certain mass percentage is mixed with the organic solvent, a metal complex of a certain mass percentage is added after the resin and the organic solvent are uniformly stirred, and a coating slurry is obtained after stirring the metal complex, the resin, and the organic solvent at a stirring speed of 800 r/min for 60 min to be mixed uniformly. The coating slurry is coated to a surface of a welding area 112 of a positive-electrode connector 100, and the positive-electrode connector 100 with the functional layer 120 is obtained after drying. In embodiments 1 to 17, a difference in thicknesses of functional layers 120, a difference in mass percentages of metal complexes, and a difference in materials of the metal complexes are illustrated in detail in Table 1.

Unlike embodiments 1 to 17, in comparative embodiment 1, the functional layer 120 is not coated on the connector 100.

2. Batteries in embodiments 1 to 17 and comparative embodiment 1 are manufactured through the following operations.
1) Manufacturing of a positive electrode sheet: a positive-electrode active material, a conductive agent, and a binder are dispersed into a solvent and mixed uniformly to obtain a positive electrode slurry. The positive electrode slurry is coated on a current collector, e.g., aluminum foil, and the current collector, e.g., the aluminum foil, coated with the positive electrode slurry is subject to drying, cold pressing, slitting, and cutting to obtain a positive electrode sheet.
2) Manufacturing of a negative electrode sheet: a positive-electrode active material, a conductive agent, and a binder are dispersed into a solvent and mixed uniformly to obtain a positive electrode slurry. The positive electrode slurry is coated on a current collector, e.g., copper foil, and the current collector, e.g., the copper foil, coated with the positive electrode slurry is subject to drying, cold pressing, slitting, and cutting to obtain a negative electrode sheet.
3) Manufacturing of a separator: a polypropylene (PP) film having a thickness of 16 µm is used as a separator.
4) Manufacturing of an electrolyte: in an argon gas glove box with a water content less than or equal to 1 ppm, a lithium salt, e.g., lithium hexafluorophosphate, is used as a solute, and an ester-based organic solvent is used as a solvent. The dry solute is dissolved in the solvent, the dry solute and the solvent are stirred until the solute is completely and uniformly dissolved, and an electrolyte is obtained.
5) Assembly of a battery: the positive electrode sheet, the separator, and the negative electrode sheet are stacked in sequence, so that the separator is located between the positive electrode sheet and the negative electrode sheet to achieve separation. The positive electrode sheet, the separator, and the negative electrode sheet as a whole are wound to form an electrode assembly. The positive-electrode connector 100 and a positive electrode tab of the electrode assembly are welded by a laser, and the negative-electrode connector 100 and a negative electrode tab of the electrode assembly are welded by the laser. A wavelength of the laser is 1064 nm, welding power of the laser is 2200 W, and a welding speed of the laser is 120 mm/s. The electrode assembly is placed in an outer packaging housing. After drying, the electrolyte is injected. After vacuum packaging, standing, forming, shaping, etc., a battery is finally obtained. The connectors 100 in embodiments 1 to 17 and comparative embodiment 1 each serve as the positive-electrode connector 100, and a conventional copper-based connector 100 serves as the negative-electrode connector 100. After assembly, batteries in embodiments 1 to 17 and comparative embodiment 1 are obtained.

Coating dissolution test: the connectors 100 in embodiments 1 to 17 are respectively immersed in the electrolyte weighting 100 g for 12 hours, the electrolyte with the immersed connectors 100 is analyzed and tested by using a Thermo Scientific^{™} iCAP^{™} 7400 inductively coupled plasma-optical emission spectrometer, and a concentration of a metal cation obtained after coating dissolution (i.e., a mass content of the metal cation in the electrolyte) in each of embodiments 1 to 17 is analyzed.

Welding test: observe, by using a metallographic microscope, whether the welding area 112 of the connector 100 has defects such as lack of penetration, a crack, or an air hole.

Charge-and-discharge cycling performance test: the batteries obtained in foregoing embodiments 1 to 17 and comparative embodiment 1 are subject to a constant-current charge-and-discharge cycle test on a charge-and-discharge meter, where a test temperature is 25°C, a charge-and-discharge rate is 0.5C (a magnitude of a charge-and-discharge current is usually represented by a charge-and-discharge rate), a calculation formula of the charge-and-discharge current is: charge-and-discharge current = charge-and-discharge rate × rated capacity of battery, a charge-and-discharge voltage window ranges from 2.0V to 3.65V (i.e., a charge cut-off voltage of the battery is 3.65V, and a discharge cut-off voltage of the battery is 2.0V), and generally a complete charge-and-discharge process is referred to as a charge-and-discharge cycle. That is, the battery is charged to 3.65 V and stood, and then discharged from 3.65 V to 2.0 V, so that a charge-and-discharge cycle is formed. N times of cycling is to repeat the above operations N times.

Internal resistance test of a battery: after a charge-and-discharge cycle of the battery, a state of charge (SOC) of the battery is adjusted to 27%, the test temperature is 25°C, the discharge rate is 1C, a discharge time is 30s, and voltage U1 of the battery before discharge and voltage U2 of the battery after discharge are recorded respectively. An internal resistance calculation formula of the battery is: direct current resistance (DCR) = (U1-U2)/I.

Dividing capacity testing: a discharge capacity of the battery after being subject to a charge-and-discharge cycle is calibrated as a dividing capacity.

A calculation formula of a capacity retention rate is: capacity retention rate = capacity of the battery after N times of cycling/initial capacity of the battery × 100%.

Table 1 illustrates parameter control and performance comparison in embodiments and the comparative embodiment. Table 1 includes sub-table 1 and sub-table 2. Sub-table 1 illustrates parameter control in embodiments and the comparative embodiment, and sub-table 2 illustrates performance comparison in embodiments and the comparative embodiment. Performance comparison in embodiments and the comparative embodiment illustrated in sub-table 2 are based on parameter control in embodiments and the comparative embodiment illustrated in sub-table 1.

**Sub-table 1:**

| Serial number | Thickness of functional layer (µm) | mass percentage of metal complex | Type of metal complex |
|---|---|---|---|
| embodiment 1 | 0.03 | 95% | acid mordant black T-chromium |
| embodiment 2 | 0.2 | 95% | acid mordant black T-chromium |
| embodiment 3 | 0.5 | 95% | acid mordant black T-chromium |
| embodiment 4 | 1 | 95% | acid mordant black T-chromium |
| embodiment 5 | 2 | 95% | acid mordant black T-chromium |
| embodiment 6 | 3 | 95% | acid mordant black T-chromium |
| embodiment 7 | 1 | 50% | acid mordant black T-chromium |
| embodiment 8 | 1 | 80% | acid mordant black T-chromium |
| embodiment 9 | 1 | 97% | acid mordant black T-chromium |
| embodiment 10 | 1 | 99.5% | acid mordant black T-chromium |
| embodiment 11 | 1 | 97% | iron phthalocyanine |
| embodiment 12 | 1 | 97% | zinc phthalocyanine |
| embodiment 13 | 1 | 97% | chromium phthalocyanine |
| embodiment 14 | 1 | 97% | Thiodiene chromium |
| embodiment 15 | 1 | 97% | thiodiene titanium |
| embodiment 16 | 1 | 97% | acid mordant black T-iron |
| embodiment 17 | 1 | 97% | Polyurethane chromium |
| comparative embodiment 1 | / | / | / |

**Sub-table 2:**

| Serial number | Reflectivity for laser | whether there is welding defect | internal resistance of battery (mΩ) | concentration of metal cation (ppm) | dividing capacity (Ah) | capacity retention rate after 500 times of cycling |
|---|---|---|---|---|---|---|
| embodiment 1 | 67% | no | 0.74 | 4 | 49.5 | 82% |
| embodiment 2 | 21% | no | 0.62 | 10 | 50.5 | 94% |
| embodiments | 15% | no | 0.61 | 17 | 50.4 | 93% |
| embodiment4 | 12% | no | 0.60 | 31 | 50.5 | 95% |
| embodiments | 10% | no | 0.63 | 65 | 50.5 | 92% |
| embodiment6 | 10% | no | 0.71 | 106 | 50.1 | 78% |
| embodiment7 | 47% | no | 0.72 | 13 | 49.4 | 81% |
| embodiments | 22% | no | 0.63 | 26 | 50.3 | 90% |
| embodiment9 | 12% | no | 0.59 | 32 | 50.5 | 96% |
| embodiment 10 | 26% | no | 0.65 | 35 | 50.1 | 89% |
| embodiment 11 | 41% | no | 0.69 | 34 | 50.0 | 82% |
| embodiment 12 | 45% | no | 0.72 | 31 | 49.5 | 83% |
| embodiment 13 | 16% | no | 0.61 | 36 | 50.4 | 91% |
| embodiment 14 | 19% | no | 0.64 | 38 | 50.3 | 90% |
| embodiment 15 | 69% | no | 0.75 | 27 | 49.4 | 83% |
| embodiment 16 | 17% | no | 0.63 | 31 | 50.4 | 91% |
| embodiment 17 | 53% | no | 0.72 | 0 | 49.6 | 80% |
| comparative embodiment 1 | 76% | yes | 0.78 | 0 | 49.2 | 74% |

The following may be seen from table 1.
1) The connector 100 in each of embodiments 1 to 17 is provided with the functional layer 120, and the connector 100 in comparative embodiment 1 is not provided with the functional layer 120. It may be seen from the test results that, the reflectivity of the connector 100 in each of embodiments 1 to 17 for the laser is less than 70%, and the welding area 112 of the connector 100 is free from defects such as lack of penetration, a crack, or an air hole. In each of embodiments 1 to 17, the internal resistance of the battery is lower than 0.75 mΩ, and the dividing capacity of the battery is higher than 49.4 Ah. After 500 times of cycling, the capacity retention rate of the battery in each of embodiments 1 to 17 is greater than or equal to 80%. However, in comparative embodiment 1, the reflectivity of the connector 100 for the laser is 76%, and the welding area 112 of the connector 100 has defects such as lack of penetration, a crack, or an air hole. In comparative embodiment 1, the internal resistance of the battery is 0.78 mΩ, and the dividing capacity of the battery is only 49.2 Ah. After 500 times of cycling, the capacity retention rate of the battery in comparative embodiment 1 is only 74%. It may be seen therefrom that arrangement of the functional layer 120 for the connector 100 has an important impact on the laser welding effect of the connector 100 and the performance of the battery. By disposing the functional layer 120 on the surface of the welding area 112 of the current collecting layer 110, the absorption rate of the functional layer 120 for the laser is greater than the absorption rate of the current collecting layer 110 for the laser. Therefore, the reflectivity of the connector 100 for the laser may be reduced, and absorption of the laser energy by the welding area 112 may be improved. In this case, intensity of welding the connector 100 to a tab and the like may be increased after laser welding, connection intensity between the connector 100 and the tab may be ensured, and a resistance of the battery may be reduced, thereby ensuring that the battery may have a relatively high capacity and a good cycle life.
2) It may be seen from embodiments 1 to 6 that, the thickness D of the functional layer 120 in each of embodiments 2 to 5 satisfies: 0.2 µm ≤ D ≤ 2 µm, the thickness D of the functional layer 120 in embodiment 1 is less than 0.2 µm, and the thickness D of the functional layer 120 in embodiment 6 is greater than 2 µm. It may be seen from the test results that, the reflectivity of the connector 100 in each of embodiments 2 to 5 for the laser is lower than 25%, the internal resistance of the battery in each of embodiments 2 to 5 is lower than 0.65 mΩ, and the dividing capacity of the battery in each of embodiments 2 to 5 is higher than 50.3 Ah. After 500 times of cycling, the capacity retention rate of the battery in each of embodiments 2 to 5 is greater than or equal to 92%. Among batteries in embodiments 2 to 5, the battery in embodiment 4 has a best overall performance. However, in embodiment 1, the reflectivity of the connector 100 for the laser is up to 67%, the internal resistance of the battery is 0.74 mΩ, the dividing capacity of the battery is only 49.5 Ah, and after 500 times of cycling, the capacity retention rate of the battery is only 82%. In embodiment 6, the internal resistance of the battery is 0.71 mΩ, the dividing capacity of the battery is only 50.1 Ah, the concentration of the metal cation in the electrolyte is up to 106 ppm, and after 500 times of cycling, the capacity retention rate of the battery is only 78%. It may be seen therefrom that, when the mass percentage of the metal complex in the functional layer 120 and the type of the metal complex are constant, the thickness of the functional layer 120 has an important impact on the laser welding effect of the connector 100 and the performance of the battery. When the thickness D of the functional layer 120 is less than 0.2 µm, the functional layer 120 covering the current collecting layer 110 is too thin. In this case, when the laser irradiates on the connector 100, most laser energy may be reflected back by the current collecting layer 110. As a result, the absorption rate of the connector 100 for the laser is relatively low, leading to a risk of poor welding and a relatively high internal resistance of the battery, thereby affecting intensity of welding the connector 100 to the tab and the like and affecting the performance of the battery. When the thickness D of the functional layer 120 is greater than 2 µm, the functional layer 120 covering the current collecting layer 110 is too thick. In this case, during laser welding, the functional layer 120 is located between the current collecting layer 110 and the tab, and thus a relatively thick functional layer 120 may affect not only intensity of welding the current collecting layer 110 to the tab but also current transmission efficiency between the tab and the current collector 110, resulting in a relatively high resistance of the battery. Meanwhile, when the metal complex is dissolved in the electrolyte, a concentration of the metal cation in the electrolyte is too high, so that many side reactions may occur in a battery system, and thus a cycling performance of the battery may be deteriorated. By setting that the thickness D of the functional layer 120 satisfies: 0.2 µm≤D≤2 µm, the connector 100 may have a relatively high absorption rate for the laser, and intensity of welding the connector 100 to the tab may be increased, thereby ensuring current transmission efficiency of the battery and reducing the internal resistance of the battery. In this case, it may also be ensured that after the functional layer 120 is dissolved in the electrolyte, a concentration of a metal cation introduced is within a controllable range, thereby ensuring that the battery may have a relatively high capacity and a good cycle life.
3) It may be seen from embodiment 4, and embodiments 7 to 10 that the mass percentage W₁ of the metal complex in the functional layer 120 in each of embodiment 4, embodiment 8, and embodiment 9 satisfies: 80%≤W₁≤99%, the mass percentage W₁ of the metal complex in the functional layer 120 in embodiment 7 is less than 80%, and the mass percentage W₁ of the metal complex in the functional layer 120 in embodiment 10 is greater than 99%. From the test results, it may be seen that in each of embodiment 4, embodiment 8, and embodiment 9, the reflectivity of the connector 100 for the laser is less than 25%, the internal resistance of the battery is lower than 0.64 mΩ, the dividing capacity of the battery is greater than or equal to 50.3 Ah, and after 500 times of cycling, the capacity retention rate of the battery is greater than or equal to 90%. Among the battery in embodiment 4, the battery in embodiment 8, and the battery in embodiment 9, the battery in embodiment 9 has the best overall performance. However, in embodiment 7, the reflectivity of the connector 100 for the laser is 47%, the internal resistance of the battery is 0.72 mΩ, the dividing capacity of the battery is only 49.4 Ah, and after 500 times of cycling, the capacity retention rate of the battery is only 81%. In embodiment 10, the internal resistance of the battery is 0.65 mΩ, the dividing capacity of the battery is only 50.1 Ah, and after 500 times of cycling, the capacity retention rate of the battery is only 89%. It may be seen therefrom that, when the thickness of the functional layer 120 and the type of the metal complex are constant, the mass percentage of the metal complex in the functional layer 120 has an important impact on the laser welding effect of the connector 100 and the performance of the battery. When the mass percentage W₁ of the metal complex in the functional layer 120 is less than 80% and the mass percentage W₂ of the resin in the functional layer 120 is greater than 20%, a proportion of the metal complex in the functional layer 120 is too small, and a proportion of the resin in the functional layer 120 is too large. In this case, not only does too small amount of the metal complex have a limited contribution to increasing of the absorption intensity of the connector 100 for the laser, but also the excessive amount of the resin may increase a contact resistance between the current collecting layer 110 and the tab. Therefore, current transmission efficiency between the current collecting layer 110 and the tab may be affected, and the internal resistance of the battery may be relatively high, thereby affecting the specific capacity and the cycle life of the battery. When the mass percentage W₁ of the metal complex in the functional layer 120 is greater than 99% and the mass percentage W₂ of the resin in the functional layer 120 is less than 1%, there is relatively great difficulty for the resin to disperse the metal complex, and it is disadvantageous for the functional layer 120 to be uniformly coated on the connector 100. As a result, a binding force between the functional layer 120 and the current collecting layer 110 and the absorption intensity of the functional layer 120 for the laser may be affected, and thus the connection intensity between the connector 100 and the tab may be affected, thereby affecting the performance and use reliability of the battery. The mass percentage W₁ of the metal complex in the functional layer 120 is set to satisfy: 80%≤W₁≤99%, and the mass percentage W₂ of the resin in the functional layer 120 is set to satisfy: 1%≤W₂≤20%. In this case, on the one hand, with the aid of the metal complex in the functional layer 120, the connector 100 may reflect less lasers and increase absorption intensity for the laser, and the connection intensity between the connector 100 and the tab may be further ensured after laser welding, thereby further ensuring that the battery may have a relatively high capacity and a good cycle life. On the other hand, it may be ensured that the metal complex is uniformly dispersed in the resin and the functional layer 120 may be uniformly coated on the connector 100, and thus adhesion intensity and coating uniformity of the metal complex in the connector 100 may be ensured, thereby reducing the resistance of the battery and improving use reliability of the connector 100.
4) It may be seen from embodiment 9, and embodiments 11 to 17 that, when the thickness of the functional layer 120 and the mass percentage of the metal complex in the functional layer 120 are constant, the type of the metal complex has an important impact on the laser welding effect of the connector 100 and the performance of the battery as follows.

It may be seen from embodiments 11 to 13 that, in embodiment 13, the reflectivity of the connector 100 for the laser is 16%, the internal resistance of the battery is 0.61 mΩ, the dividing capacity of the battery is equal to 50.4 Ah, and after 500 times of cycling, the capacity retention rate of the battery in embodiment 13 is 91%. Among batteries in embodiments 11 to 13, the battery in embodiment 13 has the best overall performance. It may be seen therefrom that when the thickness of the functional layer 120 and the mass percentage of the metal complex in the functional layer 120 are constant, the type of the metal cation has an important impact on the laser welding effect of the connector 100 and the performance of the battery. Compared with zinc phthalocyanine and iron phthalocyanine, using chromium phthalocyanine as the metal complex is more conducive to improving the laser welding effect of the connector 100 and the performance of the battery. That is, when phthalocyanine is used as a ligand of the metal complex, compared with an iron ion and a zinc ion, using a chromium ion as the metal cation of the metal complex is more conducive to improving the laser welding effect of the connector 100 and the performance of the battery.

It may be seen from embodiment 14 and embodiment 15 that, in embodiment 14, the reflectivity of the connector 100 for the laser is 19%, the internal resistance of the battery is 0.64 mΩ, the dividing capacity of the battery is equal to 50.3 Ah, and after 500 times of cycling, the capacity retention rate of the battery is 90%. However, in embodiment 15, the reflectivity of the connector 100 for the laser is up to 69%, the internal resistance of the battery is 0.75 mΩ, the dividing capacity of the battery is only 49.4 Ah, and after 500 times of cycling, the capacity retention rate of the battery is only 83%. The overall performance of the battery in embodiment 14 is obviously superior to that of the battery in embodiment 15. It may be seen therefrom that, when the thickness of the functional layer 120 and the mass percentage of the metal complex in the functional layer 120 are constant, the type of the metal cation has an important impact on the laser welding effect of the connector 100 and the performance of the battery. Compared with thiodiene titanium, using thiodiene chromium as the metal complex is more conducive to improving the laser welding effect of the connector 100 and the performance of the battery. That is, when the thiodiene-typed polymer is used as the ligand of the metal complex, compared with a titanium ion, using a chromium ion as the metal cation of the metal complex is more conducive to improving the laser welding effect of the connector 100 and the performance of the battery.

It may be seen from embodiment 9 and embodiment 16 that, the reflectivity of the connector 100 in embodiment 9 for the laser is 12%, which is lower than the reflectivity of the connector 100 in embodiment 16 for the laser, and the reflectivity of the connector 100 in embodiment 16 for the laser is 17%. Furthermore, in embodiment 9, the internal resistance of the battery is 0.59 mΩ, the dividing capacity of the battery is equal to 50.5 Ah, and after 500 times of cycling, the capacity retention rate of the battery is 96%. However, in embodiment 16, the internal resistance of the battery is 0.63 mQ, the dividing capacity of the battery is 50.4 Ah, and after 500 times of cycling, the capacity retention rate of the battery is 91%. It may be seen therefrom that when the thickness of the functional layer 120 and the mass percentage of the metal complex in the functional layer 120 are constant, the type of the metal cation has an important impact on the laser welding effect of the connector 100 and the performance of the battery. Compared with acid mordant black T-iron, using acid mordant black T-chromium as the metal complex is more conducive to improving the laser welding effect of the connector 100 and the performance of the battery. That is, when acid mordant black T is used as the ligand of the metal complex, compared with an iron ion, using a chromium ion as the metal cation of the metal complex is more conducive to improving the laser welding effect of the connector 100 and the performance of the battery.

It may be seen from embodiment 9, embodiment 13, embodiment 14, and embodiment 17 that, the battery in embodiment 9 had the best overall performance among the battery in embodiment 9, the battery in embodiment 13, the battery in embodiment 14, and the battery in embodiment 17. It may be seen therefrom that, when the thickness of the functional layer 120 and the mass percentage of the metal complex in the functional layer 120 are constant, the type of the ligand has an important impact on the laser welding effect of the connector 100 and the performance of the battery. Compared with chromium phthalocyanine, thiodiene chromium, and chromium polyurethane, using acid mordant black T-chromium as the metal complex is more conducive to improving the laser welding effect of the connector 100 and the performance of the battery. That is, when a chromium ion is used as the metal cation of the metal complex, compared with phthalocyanine, a thiodiene-typed polymer, and polyurethane, using acid mordant black T as the ligand of the metal complex is more conducive to improving the laser welding effect of the connector 100 and the performance of the battery.

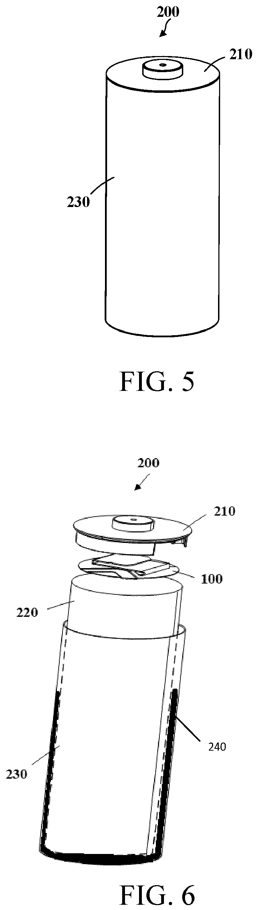

Referring to FIG. 5 and FIG. 6, a battery 200 is further provided in embodiments of the disclosure. The battery 200 includes an end cover assembly 210, a connector 100, an electrode assembly 220, an electrolyte 240, and a housing 230. The electrode assembly 220 is located in the housing 230 and is at least partially immersed in the electrolyte, and the electrode assembly 220 is electrically connected to the connector 100. The end cover assembly 210 is electrically connected to the electrode assembly 220 via the connector 100 and seals the housing 230. It may be understood that, a shape of the battery 200 of the disclosure may be a cylinder, a rectangle, or other structures. In the drawings of embodiments of the disclosure, a cylinder structure is taken as an example for illustration, and may not be construed as a limitation to the battery 200 of the disclosure.

The battery 200 in embodiments of the disclosure may be applied to an electricity-consumption device such as a vehicle, a mobile phone, a computer, a tablet computer, a toy, or a household appliance, and the battery 200 is configured to power the electricity-consumption device.

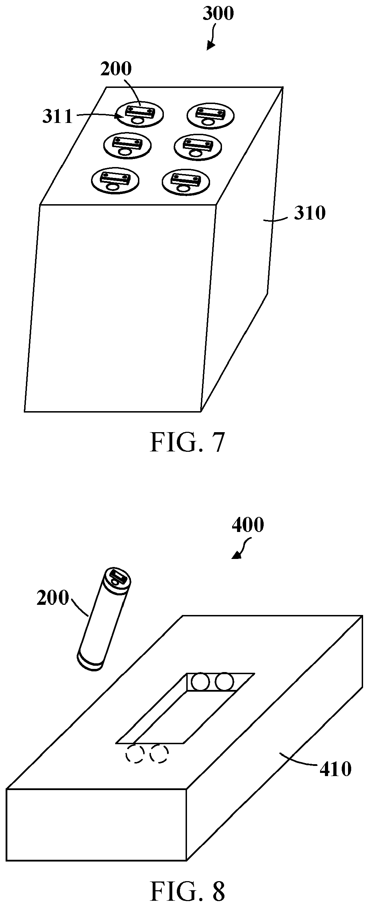

Referring to FIG. 7, a battery pack 300 is further provided in embodiments of the disclosure. The battery pack 300 includes a box 310 and multiple batteries 200 in embodiments of the disclosure. The multiple batteries 200 are received in the box 310 and electrically connected in series and/or in parallel. The term "multiple" or "a plurality of" means greater than or equal to two.

It may be understood that the multiple batteries 200 of the battery pack 300 may be connected in parallel with each other, or connected in series with each other, or partially connected in parallel and partially connected in series (i.e., in series-parallel connection), where a connection manner of the multiple batteries 200 of the battery pack 300 is not specifically limited in the disclosure.

It may be understood that the box 310 defines an accommodation cavity 311, and the multiple batteries 200 are received in the accommodation cavity 311. In some embodiments, each accommodation cavity 311 receives one battery 200. In other embodiments, each accommodation cavity 311 receives multiple batteries 200.

It may be understood that the battery pack 300 in the embodiment is only one form of the battery pack 300 to which the battery 200 is applied, which may not be understood as a limitation to the battery pack 300 provided in the disclosure and may not be understood as a limitation to the battery 200 provided in embodiments of the disclosure.

Referring to FIG. 8, an electricity-consumption device 400 is further provided in embodiments of the disclosure. The electricity-consumption device 400 includes an electricity-consumption device body 410 and the battery 200 described in embodiments of the disclosure. The battery 200 is configured to power the electricity-consumption device body 410.

The electricity-consumption device 400 in embodiments of the disclosure may be, but is not limited to, a portable electronic device such as a mobile phone, a tablet computer, a notebook computer, a desktop computer, an intelligent toy, an intelligent bracelet, an intelligent watch, an electronic reader, a game machine, or a toy, or the electricity-consumption device 400 may be a large device such as an electromobile, an electric car, a ship, or a spacecraft.

It may be understood that the electricity-consumption device 400 in the embodiment is only one form of the electricity-consumption device 400 to which the battery 300 is applied, which may not be understood as a limitation to the electricity-consumption device 400 provided in the disclosure and may not be understood as a limitation to the battery 200 provided in embodiments of the disclosure.

The term "embodiment" or "implementation" referred to herein means that a particular feature, structure, or feature described in conjunction with the embodiment or implementation may be contained in at least one embodiment of the disclosure. The phrase appearing in various places in the specification does not necessarily refer to the same embodiment, nor does it refer to an independent or alternative embodiment that is mutually exclusive with other embodiments. It is explicitly and implicitly understood by those skilled in the art that an embodiment described herein may be combined with other embodiments. In addition, it can be further understood that, the features, structures, or characteristics described in embodiments of the disclosure may be combined arbitrarily without contradiction therebetween to form another embodiment that does not depart from the spirit and scope of the technical solutions of the disclosure.

Finally, it may be noted that the foregoing embodiments are merely intended to illustrate but not limit the technical solutions of the disclosure. Although the disclosure is described in detail with reference to the foregoing optimal embodiments, those of ordinary skill in the art may understand that modifications or equivalent replacements can be made to the technical solutions of the disclosure without departing from the spirit and scope of the technical solutions of the disclosure.

## Claims

1. A connector (100), wherein the connector (100) is applied to a battery (200), the battery (200) comprises an electrolyte (240), and the connector (100) comprises:
a current collecting layer (110); and
a functional layer (120) disposed on at least part of a surface of the current collecting layer (110), wherein an absorption rate of the functional layer (120) for a laser is greater than an absorption rate of the current collecting layer (110) for the laser, and the functional layer (120) is partially soluble in the electrolyte (240).

2. The connector (100) of claim 1, wherein the current collecting layer (110) comprises a body (111) and a welding area (112), the welding area (112) is connected to the body (111), in a thickness direction of the body (111), the welding area (112) exceeds the body 111, and the functional layer (120) is disposed on a surface of the welding area (112).

3. The connector (100) of claim 1, wherein a thickness D of the functional layer (120) satisfies: 0.2 µm≤D≤2 µm.

4. The connector (100) of claim 1, wherein a thickness D of the functional layer (120) satisfies: 0.5 µm≤D≤1 µm.

5. The connector (100) of claim 1, wherein a material of the functional layer (120) comprises a metal complex and resin, wherein the metal complex is dispersed in the resin, and the metal complex is soluble in the electrolyte (240).

6. The connector (100) of claim 5, wherein a mass percentage W₁ of the metal complex in the functional layer (120) satisfies: 80%≤W₁≤99%; and a mass percentage W₂ of the resin in the functional layer (120) satisfies: 1%≤W₂≤20%.

7. The connector (100) of claim 5, wherein a mass percentage W₁ of the metal complex in the functional layer (120) satisfies: 95%≤W₁≤99%; and a mass percentage W₂ of the resin in the functional layer (120) satisfies: 1%≤W₂≤5%.

8. The connector (100) of any of claims 5 to 7, wherein the metal complex comprises a metal cation and a ligand, wherein the metal cation comprises at least one of a chromium ion, an iron ion, a titanium ion, or a zinc ion; and the ligand comprises at least one of phthalocyanine, a thiodiene-type polymer, polyurethane, or mordant black.

9. The connector (100) of any of claims 5 to 8, wherein an average particle size D₅₀ of the metal complex satisfies: 5 nm ≤ D₅₀ ≤ 20 nm.

10. The connector (100) of claim 1, wherein a reflectivity R of the functional layer (120) for the laser satisfies: 5%≤R≤70%, and an absorption rate A of the functional layer (120) for the laser satisfies: 30%≤A≤95%.

11. The connector (100) of claim 5, wherein the resin comprises at least one of rosin ester, ketone resin, xylene resin, acrylic resin, polyamide resin, ethylene resin, alkyl phenol resin, maleic acid resin, or cellulose resin.

12. A battery (200), comprising:
an electrolyte (240);
an electrode assembly (220); and
the connector (100) of any of claims 1 to 11;
wherein the electrode assembly (220) is at least partially immersed in the electrolyte (240), and the electrode assembly (220) is electrically connected to the connector (100).

13. The battery of claim 12, wherein a material of the functional layer (120) comprises a metal complex and resin, wherein the metal complex is soluble in the electrolyte (240), the metal complex comprises a metal cation and a ligand, and a mass content C of a metal cation in the electrolyte (240) satisfies: 1 ppm≤C≤70 ppm.

14. A battery pack (300), comprising:
a box (310); and
a plurality of batteries (200) of claim 12 or 13, wherein the plurality of batteries (200) are received in the box (310) and electrically connected in series and/or in parallel.

15. An electricity-consumption device (400), comprising:
an electricity-consumption device body (410); and
a battery (200) of claim 12 or 13, wherein the battery (200) is configured to power the electricity-consumption device body (410).
